# EUROPEAN PATENT APPLICATION

(11) **EP 1 717 697 A2**
(43) Date of publication of application: **02.11.2006**
(21) Application number: 06111877.4
(22) Date of filing: 29.03.2006
(51) Int. Cl.: G06F 9/445

(54) **Method of automatically enabling utilization of particular types of files**

(30) Priority: 29.04.2005 CN 200510069044
(71) Applicant: ACER INCORPORATED, Taipei Hsien 221 (TW)
(72) Inventor: LAI, Alexander I-Chi, Taipei Hsien (TW)
(74) Representative: Fleuchaus, Michael A.

(57) **Abstract**

A method of automatically enabling utilization of particular types of files is to be implemented by a user computer (10) when utilizing a file with an unrecognized file type extension. The method includes: with reference to configuration information of the user computer (10), searching a file source mapping table (100) stored in the user computer (10) or a file source mapping server (12) in a network to find source information of an application program server (11) from which an application program suitable for utilizing the file with the unrecognized file type extension could be obtained; and finding the application program server (11) with reference to the source information thus obtained, downloading the application program suitable for utilizing the file with the unrecognized file type extension from the application program server (11), and installing the application program downloaded from the application program server (11).

## Description

The invention relates to a method of automatically enabling utilization of particular types of files, more particularly to a method in which appropriate application programs for enabling utilization of particular types of files can be found and installed automatically.

Different types of files are being introduced almost daily as the development of new computer application programs continues. A file type is usually indicated using a file type extension. For example, .txt represents a text file, whereas .zip represents a zip-format compressed file. Nevertheless, since it is not possible for a general computer to have all known application programs residing therein, instances where the computer is unable to process files with unrecognized file type extensions are frequently encountered. To resolve this problem, the computer user needs to download over the Internet appropriate application programs for handling such files, which arises in inconvenience.

U.S. Patent No. 6,047,312 discloses a system for associating files with relevant application programs in a network. When a user logs onto the network, file type information associated with utilizable application programs are retrieved from a server. An application launcher stores the retrieved information in a local memory of the user workstation. When a file is selected at the user workstation, the user workstation checks its local memory for the file type information corresponding to the selected file and, if the appropriate application program is remotely stored, the application program may be initiated through the application launcher.

However, when the application program is not launched at the user workstation, the selected file must be transmitted over the network for processing, which poses a security risk. Moreover, since information related to the operating environment of the application program is not available, the file may remain non-utilizable due to incompatibility between the file type and the operating environment (such as when the user workstation is a Macintosh computer, and the application program must be launched in a Windows® operating environment).

In U.S. Patent Application Publication No. 2003/0084096, there is disclosed a method for locating automatically an application program needed to utilize a file. In the method, when the computer user attempts to utilize a particular file, and an application program that is needed to utilize the file is not available in the computing device, a browser program is launched on the computing device to locate a link to at least one application program that can utilize the file. The application program resides on a second computing device in a networked computing environment, and is available for download by the computer user.

However, the application program is often downloaded in a compressed or encrypted format, which requires decompression or decryption by the user before subsequent installation and launching. Moreover, the aforementioned problem of incompatibility between the file type and the operating environment remains unresolved.

Therefore, the object of the present invention is to provide a method of enabling util ization of particular types of files, which involves automatically searching and installing an appropriate application program with reference to configuration information of a user computer.

According to one aspect of the present invention, there is provided a method of automatically enabling utilization of particular types of files. The method is to be implemented by a user computer when utilizing a file with an unrecognized file type extension, and comprises the steps of:
a) determining if the user computer has a file source mapping table stored therein;
b) if it was determined in step a) that the user computer has the file source mapping table stored therein, searching the file source mapping table with reference to configuration information of the user computer to find source information of an application program server from which an application program suitable for util izing the file with the unrecognized file type extension could be obtained;
c) if it was determined in step a) that the user computer does not have the file source mapping table stored therein, or if the source information of the application program server was not found from the file source mapping table in step b), searching a network to find a file source mapping server, and providing the configuration information to the file source mapping server thus found such that the source information of the application program server can be searched from the file source mapping server; and
d) finding the application program server with reference to the source information thus obtained, downloading the application program suitable for utilizing the file with the unrecognized file type extension from the application program server, and installing the application program downloaded from the application program server.

According to another aspect of the present invention, there is provided a method of automatically enabling utilization of particular types of files. The method is to be implemented by a user computer when utilizing a file with an unrecognized file type extension, and comprises the steps of:
a) searching a network to find a file source mapping server;
b) providing configuration information of the user computer to the file source mapping server thus found such that source information of an application program server, from which an application program suitable for utilizing the file with the unrecognized file type extension could be obtained, can be searched from the file source mapping server; and
c) finding the application program server with reference to the source information thus obtained, downloading the application program suitable for utilizing the file with the unrecognized file type extension from the application program server, and installing the application program downloaded from the application program server.

According to yet another aspect of the present invention, there is provided a method of automatically enabling utilization of particular types of files. The method is to be implemented by a user computer when utilizing a file with an unrecognized file type extension, and comprises the steps of:
a) with reference to configuration information of the user computer, searching a file source mapping table stored in the user computer to find source information of an application program server from which an application program suitable for utilizing the file with the unrecognized file type extension could be obtained; and
b) finding the application program server with reference to the source information thus obtained, downloading the application program suitable for utilizing the file with the unrecognized file type extension from the application program server, and installing the application program downloaded from the application program server.

Other features and advantages of the present invention will become apparent in the following detailed description of the preferred embodiments with reference to the accompanying drawings, of which:
Figure 1 illustrates a system used in the implementation of the first preferred embodiment of a method of automatically enabling utilization of particular types of files according to the present invention;
Figure 2 is a flowchart of the first preferred embodiment;
Figure 3 illustrates an exemplary file source mapping table used in the first preferred embodiment;
Figure 4 is a flowchart of the second preferred embodiment of a method of automatically enabling utilization of particular types of files according to the present invention; and
Figure 5 is a flowchart of the third preferred embodiment of a method of automatically enabling utilization of particular types of files according to the present invention.

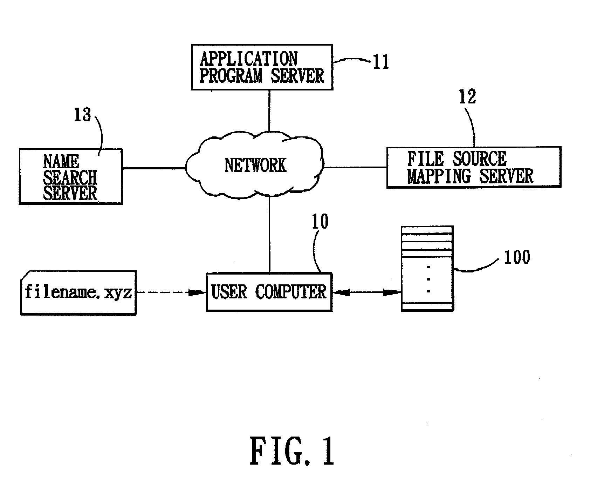

Referring to Figure 1, the first preferred embodiment of a method of automatically enabling utilization of particular types of files according to the present invention is to be implemented by a user computer 10. The user computer 10 launches proprietary computer software (i.e., a file-type plug-and-play managing software) stored in a computer readable data storage medium to execute the steps of the method of the first preferred embodiment automatically when utilizing a file with an unrecognized file type extension (such as a .zip file).

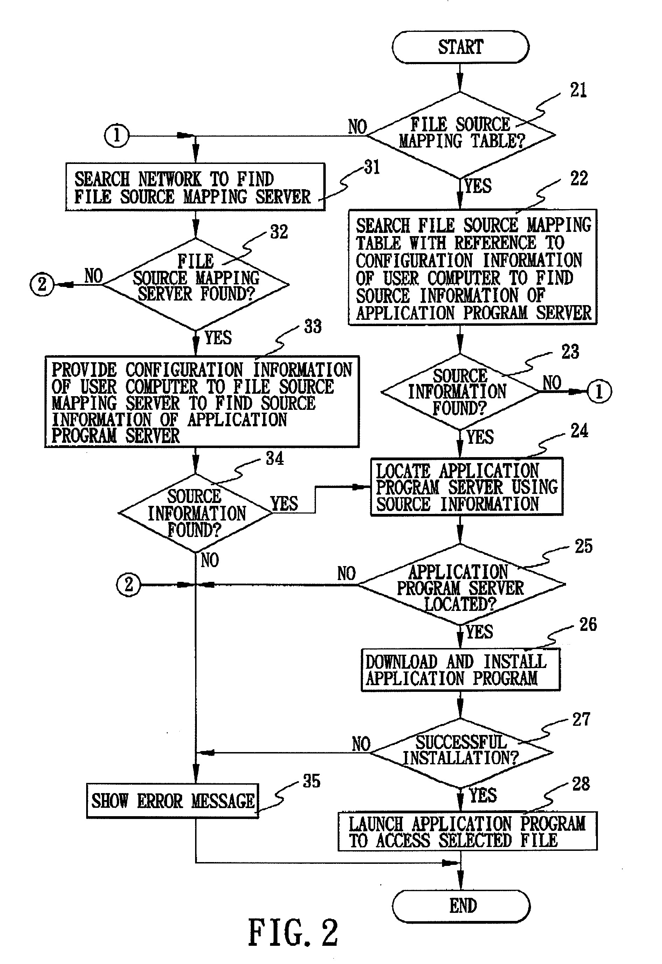

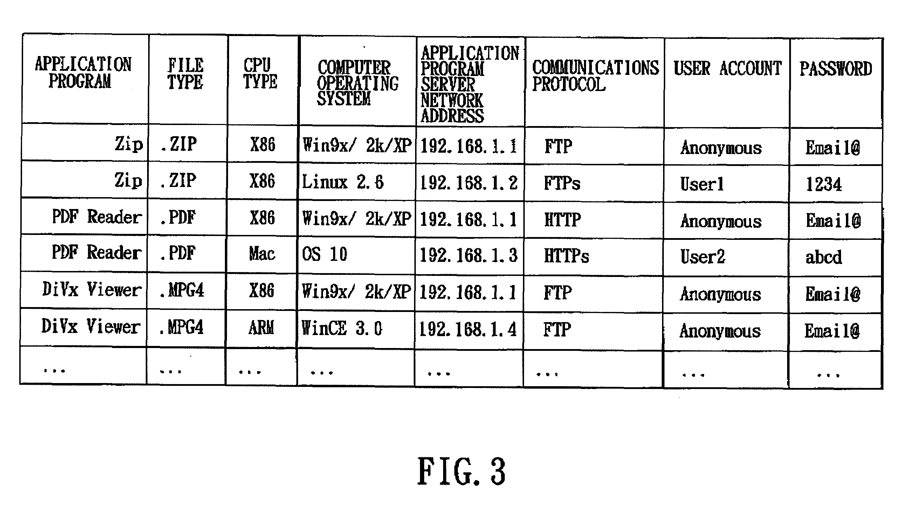

As shown in Figure 2, in step 21 of the method of the first preferred embodiment, it is determined if the user computer 10 has a file source mapping table 100 stored therein. Referring to Figure 3, the file source mapping table 100 preferably includes the following fields: an application program field for indicating different application programs, such as ZIP handlers, PDF readers, DiVx viewers, etc; a file type field for indicating file type extensions of the different application programs, such as .zip, .pdf, .mpg4, etc.; a CPU type field for indicating CPUs, such as X86, Mac, ARM, etc., to handle the different application programs; a computer operating system field for indicating operating environments, such as Win9x/2k/XP, WinCE 2.0, Linux 2.6, OS 10, etc., suitable for the different application programs; an application program server network address field for indicating network addresses of application program servers, such as 192.168.1.1, 192.168.1.2, etc., from which the different application programs could be obtained; a communications protocol field for indicating communications protocols, such as FTP, HTTP, etc., used by the different application program servers; a user account field for indicating user account names, such as Anonymous, User1, User2, etc., required when downloading the application programs; and a password field for indicating passwords, such as Email@, 123, abcd, etc., associated with the different user account names.

If it was determined in step 21 that the user computer 10 has the file source mapping table 100 stored therein, as shown in step 22 of Figure 2, with reference to configuration information of the user computer 10, the file source mapping table 100 is searched by the user computer 10 to find source information of an application program server 11 (see Figure 1) from which an application program suitable for utilizing the file with the unrecognized file type extension could be obtained. The configuration information of the user computer 10 includes specification of a central processing unit (e.g., X86) of the user computer 10, version of an operating system (e.g., Linux 2.6) of the user computer 10, and file type (e.g., .zip) of the file to be utilized. The source information includes network address (e.g., 192.168.1.1) of the application program server 11, communications protocol (e.g., FTP) used by the application program server 11, and a user account (e.g., Userl) and a password (e.g., 1234) required for downloading the application program. The application program server 11 provides application programs (e.g., ZIP application programs) for handling particular types of files (e.g., .zip files), and may be managed by a supplier of the application programs or by others.

In this embodiment, since the configuration information of the user computer 10 is used as a basis for searching the application program server 11 from the file source mapping table 100, compatibility between the application program downloaded from the application program server 11 and the user computer 10 can be ensured.

Subsequently, as shown in step 23 of Figure 2, it is determined if the source information of the application program server 11 was found from the file source mapping table 100. In the affirmative, the flow goes to step 24, where the user computer 10 locates the application program server 11 with the use of the source information thus found. Next, as shown in step 25, upon confirming that the application program server 11 has been located, the flow proceeds to step 26, in which the application program (e.g., a ZIP application program) suitable for utilizing the file with the unrecognized file type extension (e.g., .zip) is automatically downloaded by the user computer 10 from the application program server 11, and in which the application program downloaded from the application program server 11 is automatically installed in the user computer 10. Thereafter, in step 27, it is determined if the application program was successfully installed. In the affirmative, the flow goes to step 28, where the application program is automatically launched by the user computer 10 for utilizing the selected file (e.g., a .zip file).

On the other hand, if it was determined in step 21 that the user computer 10 does not have the file source mapping table 100 stored therein, or if it was determined in step 23 that the source information of the application program server 11 was not found from the file source mapping table 100, the flow proceeds to step 31. In step 31, the user computer 10 searches a network (such as the Internet or a local area network) to find a file source mapping server 12. The file source mapping server 12 provides a name search list (similar to the file source mapping table 100 shown in Figure 3) that contains the source information of the application program servers 11 furnishing application programs for utilizing different types of files. In this embodiment, the file source mapping server 12 may be found by the user computer 10 through either of the following schemes:
1) broadcasting a search request for the file source mapping server 12 in the network and waiting for an appropriate response; or
2) finding the file source mapping server 12 through a name search server 13 (see Figure 1) that provides server information in the network. The name search server 13 may be a name server, a directory sever, a domain controller, etc.

Subsequently, after confirming in step 32 of Figure 2 that the file source mapping server 12 has been found, the flow proceeds to step 33 in which the configuration information of the user computer 10 is provided to the file source mapping server 12 such that the source information (i.e., network address, communications protocol, and user account and password) of the application program server 11 can be searched from the file source mapping server 12. After confirming in step 34 that the requisite source information has been found, the aforementioned steps 24 to 28 are performed accordingly.

On the other hand, if the application program server 11 was not found in step 25, or if the file source mapping server 12 was not found in step 32, or if the source information was not found in step 34, or if installation of the application program has failed in step 27, the flow goes to step 35 for showing a relevant error message on the user computer 10 to notify the user accordingly.

Preferably, the user computer 10 is configured to establish a network connection with the file source mapping server 12 to periodically update the file source mapping table 100 using data from the file source mapping server 12.

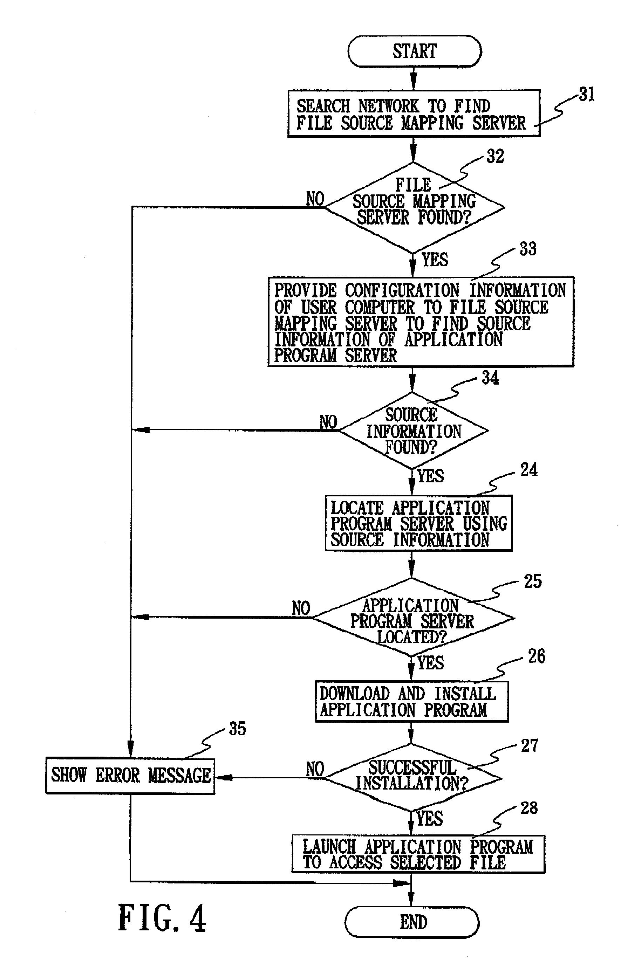

Figure 4 shows the second preferred embodiment of the method of this invention. In this embodiment, there is no file source mapping table 100 stored in the user computer 10. Hence, steps 21 to 23 in the flowchart of the first preferred embodiment (see Figure 2) are omitted. The remaining steps are similar to those described hereinabove in connection with the first preferred embodiment.

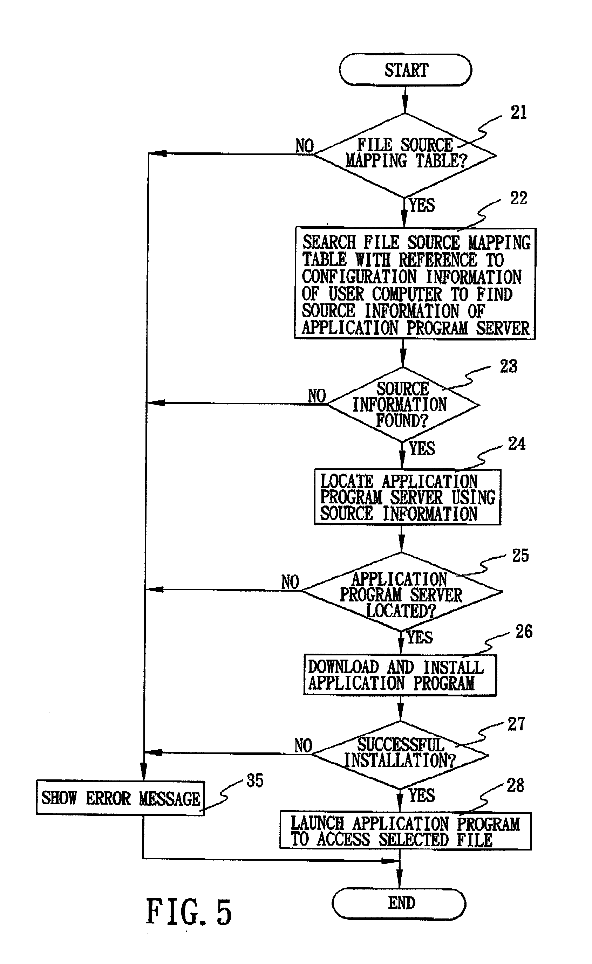

Figure 5 shows the third preferred embodiment of the method of this invention. In this embodiment, there is no option for searching a file source mapping server 12 to locate an appropriate application program server 11. Hence, steps 31 to 34 in the flowchart of the first preferred embodiment (see Figure 2) are omitted. The remaining steps are similar to those described hereinabove in connection with the first preferred embodiment.

In the third preferred embodiment, the user computer 10 is configured to establish a network connection with the file source mapping server 12 to periodically update the file source mapping table 100 using data from the file source mapping server 12.

In sum, in the method of this invention, a file source mapping table 100 stored in a user computer 10 or a file source mapping server 12 in a network is searched with reference to configuration information of the user computer 10 to find source information of an application program server 11 from which an application program suitable for utilizing a file with an unrecognized file type extension and compatible with the operating environment of the user computer 10 could be obtained. Upon finding the application program server 11 with reference to the source information thus obtained, the application program suitable for utilizing the file with the unrecognized file type extension is downloaded from the application program server 11, is subsequently installed in the user computer 10, and is launched automatically by the user computer 10 thereafter so as to permit utilization of the selected file.

## Claims

1. A method of automatically enabling utilization of particular types of files, the method to be implemented by a user computer (10) when utilizing a file with an unrecognized file type extension, said method comprising the steps of:
a) determining if the user computer (10) has a file source mapping table (100) stored therein;
b) if it was determined in step a) that the user computer (10) has the file source mapping table (100) stored therein, searching the file source mapping table (100) with reference to configuration information of the user computer (10) to find source information of an application program server (11) from which an application program suitable for utilizing the file with the unrecognized file type extension could be obtained;
c) if it was determined in step a) that the user computer (10) does not have the file source mapping table (100) stored therein, or if the source information of the application program server (11) was not found from the file source mapping table (100) in step b), searching a network to find a file source mapping server (12), and providing the configuration information to the file source mapping server (12) thus found such that the source information of the application program server (11) can be searched from the file source mapping server (12); and
d) finding the application program server (11) with reference to the source information thus obtained, downloading the application program suitable for utilizing the file with the unrecognized file type extension from the application program server (11), and installing the application program downloaded from the application program server (11).

2. The method of claim 1, wherein, in step c), the file source mapping server (12) is found through a name search server (13) that provides server information in the network.

3. The method of claim 1, wherein, in step c), the file source mapping server (12) is found through broadcasting in the network and waiting for an appropriate response.

4. The method of claim 1, wherein the file source mapping table (100) contains the source information of the application program servers (11) that provide application programs for utilizing different types of files.

5. The method of claim 1, wherein the file source mapping server (12) provides the source information of the application program servers (11) that furnish application programs for utilizing different types of files.

6. The method of claim 1, wherein the configuration information includes specification of a central processing unit of the user computer (10), version of an operating system of the user computer (10), and file type of the file to be utilized.

7. The method of claim 1, wherein the application program server (11) provides application programs for processing particular types of files.

8. The method of claim 1, wherein the source information includes network address of the application program server (11), communications protocol used by the application program server (11), and a user account and password.

9. The method of claim 2, wherein the name search server (13) is one of a name server, a directory sever, and a domain controller.

10. The method of claim 1, further comprising the step of launching the application program thus installed to enable automatic utilization of the file with the unrecognized file type extension.

11. A method of automatically enabling utilization of particular types of files, the method to be implemented by a user computer (10) when utilizing a file with an unrecognized file type extension, said method comprising the steps of:
a) searching a network to find a file source mapping server (12);
b) providing configuration information of the user computer (10) to the file source mapping server (12) thus found such that source information of an application program server (11), from which an application program suitable for utilizing the file with the unrecognized file type extension could be obtained, can be searched from the file source mapping server (12); and
c) finding the application program server (11) with reference to the source information thus obtained, downloading the application program suitable for utilizing the file with the unrecognized file type extension from the application program server (11), and installing the application program downloaded from the application program server (11).

12. The method of claim 11, wherein, in step a), the file source mapping server (12) is found through a name search server (13) that provides server information in the network.

13. The method of claim 11, wherein, in step a), the file source mapping server (12) is found through broadcasting in the network and waiting for an appropriate response.

14. The method of claim 11, wherein the file source mapping server (12) provides the source information of the application program servers (11) that furnish application programs for utilizing different types of files.

15. The method of claim 11, wherein the configuration information includes specification of a central processing unit of the user computer (10), version of an operating system of the user computer (10), and file type of the file to be utilized.

16. The method of claim 11, wherein the application program server (11) provides application programs for processing particular types of files.

17. The method of claim 11, wherein the source information includes network address of the application program server (11), communications protocol used by the application program server (11), and a user account and password.

18. The method of claim 11, further comprising the step of launching the application program thus installed to enable automatic utilization of the file with the unrecognized file type extension.

19. A method of automatically enabling utilization of particular types of files, the method to be implemented by a user computer (10) when utilizing a file with an unrecognized file type extension, said method comprising the steps of:
a) with reference to configuration information of the user computer (10), searching a file source mapping table (100) stored in the user computer (10) to find source information of an application program server (11) from which an application program suitable for utilizing the file with the unrecognized file type extension could be obtained; and
b) finding the application program server (11) with reference to the source information thus obtained, downloading the application program suitable for utilizing the file with the unrecognized file type extension from the application program server (11), and installing the application program downloaded from the application program server (11).

20. The method of claim 19, wherein the file source mapping table (100) contains the source information of the application program servers (11) that provide application programs for utilizing different types of files.

21. The method of claim 19, wherein the configuration information includes specification of a central processing unit of the user computer (10), version of an operating system of the user computer (10), and file type of the file to be utilized.

22. The method of claim 19, wherein the application program server (11) provides application programs for processing particular types of files.

23. The method of claim 19, wherein the user computer (10) is capable of establishing a network connection with a file source mapping server (12), the file source mapping server (12) providing the source information of the application program servers (11) that furnish application programs for utilizing different types of files, the user computer (10) being capable of periodically updating the file source mapping table (100) using data from the file source mapping server (12).

24. The method of claim 19, wherein the source information includes network address of the application program server (11), communications protocol used by the application program server (11), and a user account and password.

25. The method of claim 19, further comprising the step of launching the application program thus installed to enable automatic utilization of the file with the unrecognized file type extension.
